# EUROPÄISCHE PATENTSCHRIFT

(11) **EP 1 058 795 B1**
(45) Veröffentlichungstag und Bekanntmachung des Hinweises auf die Patenterteilung: **24.09.2003**
(21) Anmeldenummer: 99914477.7
(22) Anmeldetag: 04.03.1999
(51) Int. Cl.: F16D 65/16

(54) **BETÄTIGUNGSEINHEIT FÜR EINE ELEKTROMECHANISCH BETÄTIGBARE SCHEIBENBREMSE**
ACTUATING UNIT FOR AN ELECTROMECHANICALLY OPERABLE DISC BRAKE
UNITE D'ACTIONNEMENT POUR FREIN A DISQUE A ACTIONNEMENT ELECTROMECANIQUE

(30) Priorität: 05.03.1998 DE 19809362
(43) Veröffentlichungstag der Anmeldung: 13.12.2000
(73) Patentinhaber: Continental Teves AG & Co. OHG, 60488 Frankfurt am Main (DE)
(72) Erfinder: RIETH, Peter, D-65343 Eltville (DE); SCHWARZ, Ralf, D-69118 Heidelberg (DE); KRANLICH, Holger, D-61184 Karben (DE); JUNGBECKER, Johann, D-55576 Bodenheim (DE); SCHMITT, Stefan, D-65343 Eltville (DE); HOFFMANN, Oliver, D-60486 Frankfurt am Main (DE); NELL, Joachim, D-63452 Hanau (DE)
(86) Internationale Anmeldenummer: EP9901423
(87) Internationale Veröffentlichungsnummer: WO99045292

(56) Entgegenhaltungen:
- WO-A-99/21266
- DE-A- 19 511 287
- DE-C- 19 629 936
- US-A- 2 988 609
- US-A- 5 107 967

## Beschreibung

Die Erfindung betrifft eine Betätigungseinheit für eine elektromechanisch betätigbare Scheibenbremse für Kraftfahrzeuge, die an einem Bremssattel angeordnet ist, in dem zwei mit je einer Seitenfläche einer Bremsscheibe zusammenwirkende Reibbeläge begrenzt verschiebbar angeordnet sind, wobei einer der Reibbeläge mittels eines Betätigungselementes durch die Betätigungseinheit direkt und der andere Reibbelag durch die Wirkung einer vom Bremssattel aufgebrachten Reaktionskraft mit der Bremsscheibe in Eingriff bringbar ist, wobei die Betätigungseinheit aus einem Elektromotor, einem wirkungsmäßig zwischen dem Elektromotor und dem Betätigungselement angeordneten ersten Untersetzungsgetriebe sowie einem zweiten zwischen dem Elektromotor und einem Teil des ersten Untersetzungsgetriebes angeordneten zweiten Untersetzungsgetriebe besteht, und wobei der Rotor des Elektromotors ringförmig ausgebildet ist und das erste Untersetzungsgetriebe radial umgreift.

Eine derartige elektromechanische Betätigungseinheit ist z.B. aus der DE 195 11 287 A1 bekannt. Bei der vorbekannten Betätigungseinheit treibt der Elektromotor unter Zwischenschaltung eines Planetengetriebes die Gewindemutter eines Rollengewindetriebs an, dessen Gewindespindel den ersten Reibbelag betätigt. Der Rotor des Elektromotors dient gleichzeitig als Sonnenrad des Planetengetriebes, dessen Planetenräder in der Gewindemutter gelagert sind und mit einem im Bremssattel ausgebildeten Hohlrad zusammenwirken. Die Lagerung des Rotors erfolgt über die Gewindemutter mittels eines im Bremssattel angeordneten Zentrallagers.

Als nachteilig wird bei der vorbekannten Betätigungseinheit die Tatsache angesehen, dass bei deren Betätigung Störeinflüsse sowohl durch die Zuspannkraft der elektromechanischen Bremse, als auch die im Betrieb entstehenden Querkräfte und Biegemomente, über den Rollengewindetrieb auf den Rotor übertragen werden, so dass ein gleichbleibender Luftspalt zwischen dem Stator und dem Rotor nicht gewährleistet werden kann. Dies hat jedoch eine Verschlechterung des Wirkungsgrades der vorbekannten Anordnung zur Folge. Außerdem kann der als Sonnenrad des Planetengetriebes dienende Rotor durch die Wirkung der vorhin erwähnten Kräfte bzw. Biegemomente beschädigt werden.

Es ist daher Aufgabe der vorliegenden Erfindung, eine elektromechanische Betätigungseinheit der eingangs genannten Gattung dahingehend zu verbessern, dass eine Entkopplung des zweiten Untersetzungsgetriebes vom ersten Untersetzungsgetriebe erreicht wird, so dass immer die gleiche Position des Rotors gegenüber den Planetenrädern sowie der Planetenräder gegenüber dem Hohlrad gewährleistet werden kann.

Diese Aufgabe wird erfindungsgemäß dadurch gelöst, dass der Elektromotor, das erste Untersetzungsgetriebe sowie das zweite Untersetzungsgetriebe als mindestens zwei unabhängig handhabbare Baugruppen derart ausgebildet sind, dass die auf die Bremsbeläge einwirkende axiale Betätigungskraft über das erste Untersetzungsgetriebe am Bremssattel abgestützt wird. Durch diese Maßnahmen wird erreicht, dass der Elektromotor außerhalb des Kraftflusses angeordnet ist und seine Funktion durch Störeinflüsse nicht beeinträchtigt werden kann.

Zur Konkretisierung des Erfindungsgedankens ist vorgesehen, dass der Elektromotor, das erste Untersetzungsgetriebe sowie das zweite Untersetzungsgetriebe als mindestens zwei modulare Baugruppen ausgebildet sind, die getrennt und unabhängig voneinander prüfbar sind. Dabei ist es besonders vorteilhaft, wenn der Elektromotor, das erste Untersetzungsgetriebe sowie das zweite Untersetzungsgetriebe als je eine selbständig handhabbare Baugruppe ausgebildet sind. Eine derart aufgebaute elektromechanische Betätigungseinheit zeichnet sich durch einen hohen Wirkungsgrad, eine hervorragende Dynamik der Bremsbetätigung sowie eine extrem kompakte Bauweise aus, bei der hohe, massenbezogene Bremsmomente übertragen werden können. Außerdem können die modular ausgeführten Baugruppen separat gebaut und geprüft werden.

Bei einer vorteilhaften Weiterbildung des Erfindungsgegenstandes ist vorgesehen, dass das zweite Untersetzungsgetriebe auf der den Bremsbelägen abgewandten Seite des Elektromotors angeordnet ist. Durch diese Maßnahme wird eine Entkopplung des zweiten Untersetzungsgetriebes vom ersten Untersetzungsgetriebe konstruktiv ermöglicht, so dass eine Verformung des zweiten Untersetzungsgetriebes wirksam verhindert wird innerhalb des Getriebes gleichbleibende Spiele eingehalten werden können.

Ein kurzer Kraftübertragungsweg der Zuspannkraft wird bei einer anderen vorteilhaften Ausführung dadurch erreicht, dass das erste Untersetzungsgetriebe als ein Wälzkörpergewindetrieb ausgebildet ist, dessen Gewindemutter mit dem zweiten Untersetzungsgetriebe zusammenwirkt.

Alternativ kann das erste Untersetzungsgetriebe als ein Wälzkörpergewindetrieb ausgebildet sein, dessen Gewindespindel mit dem zweiten Untersetzungsgetriebe zusammenwirkt. Durch diese Maßnahme wird eine Optimierung des mit der Gewindespindel zusammenwirkenden Zentrallagers erreicht.

Eine weitere vorteilhafte Weiterbildung der Erfindung zeichnet sich dadurch aus, dass das erste Untersetzungsgetriebe als ein Rollengewindetrieb, vorzugsweise als ein Rollengewindetrieb mit innenliegender Rückführung, ausgebildet ist. Durch die hohe Tragzahl der Gewinderollen kann eine optimale Kraftübertragung erreicht werden, wobei die innenliegende Rückführung der Gewinderollen eine einfache Fertigung der Gewindemutter ermöglicht.

Eine weitere Ausgestaltung der Erfindung, die sich insbesondere durch eine geringe Querkraftempfindlichkeit auszeichnet, sieht vor, dass das erste Untersetzungsgetriebe als ein Kugelgewindetrieb ausgebildet ist.

Dabei ist es besonders vorteilhaft, wenn das Betätigungselement mit der Gewindespindel des Wälzkörpergewindetriebs in kraftübertragender Verbindung steht und durch eine Kraftübertragungsplatte gebildet ist, die in einem den Wälzkörpergewindetrieb aufnehmenden ringförmigen Gehäuse geführt ist. Die Kraftübertragungsplatte weist vorzugsweise mindestens zwei radial gegenüberliegende Führungsbolzen auf, die von entsprechend ausgebildeten Führungsflächen im Gehäuse aufgenommen werden. Durch diese Maßnahmen wird eine wirksame Trennung der Zuspannkraft von den im Betrieb auftretenden Querkräften erreicht, die in den Bremssattel eingeleitet werden.

Bei einer anderen vorteilhaften Ausgestaltung der Erfindung stützt sich die Gewindemutter an einem im Gehäuse angeordneten Lagerring axial ab, wobei zwischen dem Lagerring und dem Gehäuse ein Kraftsensor angeordnet ist. Diese Maßnahmen ermöglichen die Realisierung eines Konzepts mit sehr kurzem Kraftfluss, wobei der Kraftsensor ein im Kraftfluss angeordnetes, unbewegliches Bauteil bildet.

Eine günstige Lastverteilung im Kugelgewindetrieb wird nach einem weiteren vorteilhaften Merkmal der Erfindung dadurch erreicht, dass die Gewindespindel des Kugelgewindetriebs eine konische Bohrung aufweist, die eine der Übertragung von Druckkräften dienende Druckstange aufnimmt, deren anderes Ende sich verdrehgesichert in einem axialen Fortsatz der Kraftübertragungsplatte abstützt. Durch diese Maßnahmen wird die Gewindespindel lediglich auf Zug belastet und eine Vergleichmäßigung der Traganteile der einzelnen Kugeln erreicht.

Um den Betätigungsmechanismus insbesondere vor Verunreinigungen, beispielsweise Spritzwasser, wirksam zu schützen, sieht eine andere vorteilhafte Weiterbildung der Erfindung vor, dass zwischen der Kraftübertragungsplatte und dem Gehäuse eine elastische Dichtung vorgesehen ist.

Um eine erhebliche Reduzierung des vom Elektromotor aufzubringenden erforderlichen Antriebsmoments zu erreichen ist das zweite Untersetzungsgetriebe als ein Planetengetriebe ausgebildet. Das Planetengetriebe stellt ein nicht reibungsbehaftetes, nicht sich verformendes Getriebe dar, mit dem bei geringem Bauraum ein hoher Wirkungsgrad erreichbar ist.

Eine höhere Übersetzung wird bei einer weiteren Ausgestaltung des Erfindungsgegenstandes dadurch erreicht, dass das zweite Untersetzungsgetriebe als ein Planetengetriebe mit gestuften Planetenrädern ausgebildet ist.

Eine weitere Erhöhung des erreichbaren Übersetzungsverhältnisses wird dadurch erreicht, dass die Planetenräder mit ihrer ersten Stufe mit einem Sonnenrad im Eingriff stehen, während die Planetenräder mit ihrer zweiten Stufe unter Zwischenschaltung je eines Stirnrades mit einem Hohlrad im Eingriff stehen. Es ist jedoch auch durchaus denkbar, das zweite Untersetzungsgetriebe als ein zweistufiges Differenzplanetengetriebe auszubilden. Bei der leitgenannten Getriebeart wird eine optimale Baulänge erreicht, wobei ein größeres Sonnenrad verwendet werden kann.

Bei einer weiteren vorteilhaften Ausgestaltung des Erfindungsgegenstandes wird eine Bauraumoptimierung dadurch erreicht, dass das Sonnenrad des Planetengetriebes am Rotor ausgebildet ist, während die Planetenräder in einem mit der Gewindemutter in kraftübertragender Verbindung stehenden Planetenkäfig gelagert sind und aus je einem mit dem Sonnenrad im Eingriff stehenden ersten Planetenrad größeren Durchmessers sowie je einem mit einem Hohlrad im Eingriff stehenden zweiten Planetenrad kleineren Durchmessers bestehen. Das Hohlrad des Planetengetriebes wird dabei vorzugsweise durch einen mit einer Innenverzahnung versehenen Außenring eines Radiallagers gebildet, in dem der Planetenkäfig gelagert ist. Durch diese Maßnahmen wird ein hoher Integrationsgrad der Anordnung erreicht.

Eine wirksame Abkoppelung der im Betrieb auftretenden Querkräfte erfolgt bei einer vorteilhaften Weiterbildung der Erfindung dadurch, dass das Betätigungselement durch die Gewindemutter des Wälzkörpergewindetriebs gebildet ist.

Eine Entkopplung des Kraftflusses von der Antriebseinheit bzw. dem Elektromotor wird nach einem weiteren Erfindungsmerkmal dadurch gewährleistet, dass ein sich an einem den Wälzkörpergewindetrieb aufnehmenden ringförmigen Gehäuse abstützendes, die Gewindemutter umgreifendes Führungsteil vorgesehen ist, an dem sich die Gewindespindel axial abstützt. Die axiale Abstützung der Gewindespindel erfolgt dabei unter Zwischenschaltung eines Axiallagers mittels eines radialen Bundes. Dadurch kann ein Lager mit kleinstem Durchmesser verwendet werden.

Außerdem ist es besonders vorteilhaft, wenn am Führungsteil Kraftmesselemente vorgesehen sind, so dass Kraftmessungen am nicht beweglichen Teil, das einer definierten Verformung unterliegt, vorgenommen werden können.

Durch eine zwischen der Gewindemutter und dem Führungsteil angeordnete elastische Dichtung bzw. Manschette wird ein wirksamer Schutz der Anordnung vor Verunreinigungen erreicht.

Ein direktes Einleiten der im Betrieb auftretenden Querkräfte ins Gehäuse des ersten Untersetzungsgetriebes erfolgt dadurch, dass die Gewindemutter an ihrem dem ersten Reibbelag zugewandten Ende in einem Führungsring geführt ist. Um auch diese Anordnung vor Eindringen von Verunreinigungen, beispielsweise Spritzwasser, wirksam zu schützen, ist vorgesehen, dass zwischen der Gewindemutter und dem Führungsring eine elastische Dichtung bzw. Manschette vorgesehen ist.Eine andere vorteilhafte Ausführung des Erfindungsgegenstandes sieht vor, dass das Sonnenrad des Planetengetriebes am Rotor ausgebildet ist, während die Planetenräder in einem mit der Gewindespindel in kraftübertragender Verbindung stehenden Planetenkäfig gelagert sind und aus einem mit dem Sonnenrad im Eingriff stehenden ersten Planetenrad größeren Durchmessers sowie einem mit einem Hohlrad im Eingriff stehenden zweiten Planetenrad kleineren Durchmessers bestehen.

Eine Bauraumoptimierung wird bei der vorhin erwähnten Ausführung dadurch erreicht, dass das Hohlrad des Planetengetriebes durch eine Innenverzahnung gebildet ist, die in einem Deckel ausgebildet ist, der ein Gehäuse des Planetengetriebes bildet und am Gehäuse des Elektromotors angeordnet ist.

Eine wesentliche Vereinfachung der Montage der erfindungsgemäßen Betätigungseinheit wird bei einer weiteren Ausgestaltung des Erfindungsgegenstandes dadurch erreicht, dass die Kraftübertragung zwischen dem Planetenkäfig und der Gewindespindel mittels einer formschlüssigen Steckverbindung erfolgt.

Eine kostengünstige Ausführung der erfindungsgemäßen Betätigungseinheit zeichnet sich dadurch aus, dass der Planetenkäfig im Deckel mittels eines Radiallagers gelagert ist. Ein derartiges Planetengetriebe ist einfach herstellbar und kann separat geprüft werden.

Dabei ist es sinnvoll, wenn die formschlüssige Steckverbindung torsionssteif und radial nachgiebig an den Planetenkäfig angekoppelt ist. Durch diese Maßnahme erfolgt eine wirksame Entkopplung von Störeinflüssen. Die Gewindespindel kann vorzugsweise einteilig oder mehrteilig ausgeführt sein.

Eine weitere vorteilhafte Ausgestaltung des Erfindungsgegenstandes zeichnet sich dadurch aus, dass die Gewindemutter an ihrem dem ersten Reibbelag abgewandten Ende mit einem Vorsprung versehen ist, der an einem an der Gewindespindel ausgebildeten, in Umfangsrichtung wirkenden Anschlag zur Anlage bringbar ist. Durch diese Maßnahme wird erreicht, dass insbesondere beim Lösevorgang, bei dem die Gewindemutter zurückgedreht wird, kein Verspannen bzw. Klemmen des ersten Untersetzungsgetriebes eintritt.

Um mit der erfindungsgemäßen Betätigungseinheit gleichzeitig eine Feststellbremsfunktion erfüllen zu können, wird vorgeschlagen, dass elektromechanische Mittel vorgesehen sind, die ein Verriegeln des Rotors des Elektromotors ermöglichen.

Eine besonders ausfallsichere, auf dem Formschlussprinzip arbeitende Ausführung sieht vor, dass die Mittel durch einen mit dem Rotor verbundenen Zahnkranz sowie eine elektromagnetisch betätigbare Sperrklinke gebildet sind.

Die Sperrklinke ist dabei vorzugsweise mit Rastmitteln versehen, die deren Verrasten sowohl in der betätigten als auch in der unbetätigten Stellung ermöglichen.

Der Elektromotor kann bei weiteren vorteilhaften Ausführungen der Erfindung als ein permanentmagneterregter, elektronisch kommutierter Elektromotor (Torque-Motor) oder als eingeschalteter Reluktanzmotor (SR-Motor) ausgeführt sein.

Die erwähnten Motorarten sind zur Erzeugung hoher Drehmomente im Stillstand besonders geeignet.

Sollten schließlich mit der erfindungsgemäßen Betätigungseinheit Regelungsvorgänge realisiert werden, so ist es notwendig, ein Lageerkennungssystem vorzusehen, das eine Erkennung der Position des Rotors des Elektromotors ermöglicht und vorzugsweise einen Hallsensor oder ein magnetoresistives Element aufweist.

Die Erfindung wird in der nachfolgenden Beschreibung von drei Ausführungsbeispielen unter Bezugnahme auf die beiliegende Zeichnung näher erläutert.

In der Zeichnung zeigt:
- Fig. 1: eine erste Ausführung der erfindungsgemäßen, elektromechanischen Betätigungseinheit im Axialschnitt;
- Fig. 2: eine zweite Ausführung des Erfindungsgegenstandes in einer der Fig. 1 entsprechenden Darstellung;
- Fig. 3: eine dritte Ausführung der erfindungsgemäßen elektromechanischen Betätigungseinheit in einer der Fig. 1 entsprechenden Darstellung, und
- Fig. 4: eine Explosionszeichnung, die das bei der dritten Ausführung gemäß Fig. 3 verwendete erste Untersetzungsgetriebe darstellt.

Die in der Zeichnung dargestellte, elektromechanische Betätigungseinheit nach der Erfindung dient der Betätigung einer Schwimmsattel-Scheibenbremse, deren lediglich schematisch angedeuteter Bremssattel in einem nicht gezeigten feststehenden Halter verschiebbar gelagert ist. Ein Paar von Reibbelägen 4 und 5 ist im Bremssattel derart angeordnet, dass sie der linken und der rechten Seitenfläche einer Bremsscheibe 6 zugewandt sind.

Nachstehend wird der in der Zeichnung rechts gezeigte Reibbelag 4 als erster Reibbelag und der andere, mit 5 bezeichnete Reibbelag als zweiter Reibbelag bezeichnet.

Während der erste Reibbelag 4 mittels eines Betätigungselements 15 durch die Betätigungseinheit direkt mit der Bremsscheibe 6 in Eingriff bringbar ist, wird der zweite Reibbelag 5 durch die Wirkung einer bei der Betätigung der Anordnung vom Bremssattel aufgebrachten Reaktionskraft gegen die gegenüberliegende Seitenfläche der Bremsscheibe 6 gedrückt.

Die erfindungsgemäße Betätigungseinheit, die mittels nicht gezeigter Befestigungsmittel am Bremssattel angebracht ist, weist einen modularm Aufbau auf und besteht im wesentlichen aus drei selbständig handhabbaren Baugruppen bzw. Modulen, und zwar aus einer Antriebseinheit 1, einem den ersten Reibbelag 4 betätigenden ersten Untersetzungsgetriebe 2 und einem zwischen der Antriebseinheit 1 und dem ersten Untersetzungsgetriebe 2 wirkungsmäßig geschalteten zweiten Untersetzungsgetriebe 3.

Die vorhin erwähnte Antriebseinheit 1 besteht aus einem Elektromotor 11, der im dargestellten Beispiel als ein permanentmagneterregter, elektronisch kommutierter (Torque-) Motor ausgebildet ist, dessen Stator 9 unbeweglich in einem Motorgehäuse 12 angeordnet ist und dessen Rotor 10 durch einen ringförmigen Träger 13 gebildet ist, der mehrere Permanentmagnetsegmente 14 trägt. Zwischen dem Torque-Motor 11 und dem vorhin erwähnten Betätigungselement 15 ist wirkungsmäßig das erste Untersetzungsgetriebe 2 angeordnet, das im gezeigten Beispiel als ein Kugelgewindetrieb 16 bis 18 ausgebildet ist, das in einem Getriebegehäuse 19 gelagert ist. Der Kugelgewindetrieb besteht dabei aus einer Gewindemutter 16 sowie einer Gewindespindel 17, wobei zwischen der Gewindemutter 16 und der Gewindespindel 17 mehrere Kugeln 18 angeordnet sind, die bei einer Rotationsbewegung der Gewindemutter 16 umlaufen und die Gewindespindel 17 in eine axiale bzw. translatorische Bewegung versetzen. Das Getriebegehäuse 19 kann auch einteilig mit dem vorhin erwähnten Bremssattel ausgeführt sein.

Die Anordnung ist dabei vorzugsweise derart getroffen, dass der Rotor 10 des Torque-Motors 11 unter Zwischenschaltung des zweiten Untersetzungsgetriebes 3 die Gewindemutter 16 antreibt, während die Gewindespindel 17 mittels einer Druckstange 24 mit dem vorhin erwähnten Betätigungselement 15 zusammenwirkt, das vorzugsweise durch eine Kraftübertragungsplatte gebildet ist, die sich am ersten Reibbelag 4 abstützt. Die Druckstange 24, die von einer in der Gewindespindel 17 ausgebildeten, konischen Bohrung 25 aufgenommen wird, stützt sich mittels eines der Verdrehsicherung dienenden Mehrkants 28 in einem axialen Fortsatz 26 der Kraftübertragungsplatte 15 ab. Um die im Betrieb der erfindungsgemäßen Betätigungseinheit auftretenden Querkräfte in das Getriebegehäuse 19 einzuleiten ist die Kraftübertragungsplatte 15 mit zwei radial gegenüberliegenden Führungsbolzen 20 versehen, die in im Getriebegehäuse 19 ausgebildeten Führungsflächen bzw. Bohrungen 21 geführt sind. Der Lagerung der Gewindemutter 16 im Getriebegehäuse 19 dient ein Axiallager bzw. Kugellager, das aus einem an der Gewindemutter 16 ausgeformten radialen Kragen 29, mehreren, nicht näher bezeichneten Kugeln sowie einem Lagerring 22 besteht. Zwischen dem Lagerring 22 und einer im Getriebegehäuse 19 ausgebildeten ringförmigen Abstützfläche ist ein Kraftsensor 23 angeordnet, der der Ermittlung der von der Betätigungseinheit aufgebrachten Spannkraft dient. Um schließlich das erste Untersetzungsgetriebe 2 vor Verunreinigungen, wie z. B. Spritzwasser, zu schützen, ist zwischen der Kraftübertragungsplatte 15 und dem Getriebegehäuse 19 eine elastische Dichtung 27 vorgesehen, die im gezeigten Beispiel als eine Dichtmanschette ausgebildet ist.

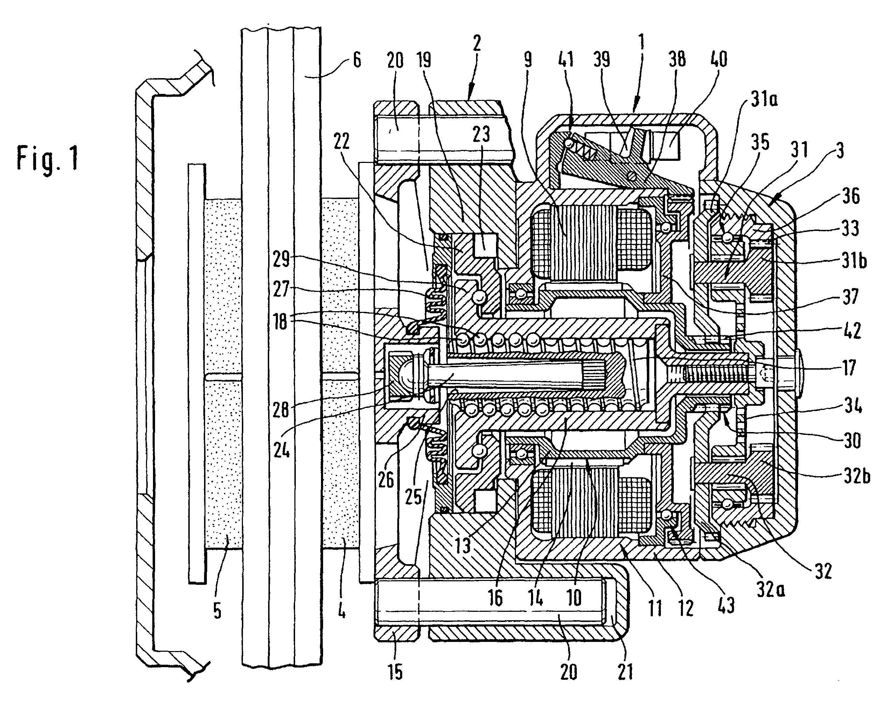

Eine Reduzierung des erforderlichen Motormoments wird bei der in Fig. 1 dargestellten Ausführungsform der Erfindung durch zweckmäßige Integration eines Planetengetriebes 30 -34 erreicht, das das vorhin erwähnte zweite Untersetzungsgetriebe 3 bildet. Das Planetengetriebe, das wirkungsmäßig zwischen dem Rotor 10 und der Gewindemutter 16 angeordnet ist, besteht aus einem Sonnenrad 30, das vorzugsweise durch einen am Rotor 10 ausgebildeten, außen verzahnten Bereich 42 gebildet ist, mehreren gestuften Planetenrädern, von denen zwei dargestellt und mit den Bezugszeichen 31 und 32 versehen sind, sowie einem Hohlrad 33. Die gestuften Planetenräder 31, 32, die in einem Planetenkäfig 34 gelagert sind, weisen eine mit dem Sonnenrad 30 zusammenwirkende erste Stufe sowie eine mit dem Hohlrad 33 zusammenwirkende zweite Stufe auf, wobei die erste Stufe durch Zahnräder 31a, 31b größeren Durchmessers und die zweite Stufe durch Zahnräder 31b, 32b kleineren Durchmessers gebildet sind. Der vorhin erwähnte Planetenkäfig 34 ist dabei vorzugsweise derart ausgeführt, dass sein zwischen den Lagerstellen der Planetenräder 31, 32 und der Ankopplungsstelle der Gewindemutter 16 liegender Bereich sowohl ein geringes axiales als auch radiales Spiel sowie einen geringen Winkelversatz zulässt und beispielsweise als eine Lamellenscheibe ausgebildet ist. Das Hohlrad 33 wird durch einen innenverzahnten Bereich eines Außenringes 36 eines Radiallagers 35 gebildet, das im gezeigten Beispiel als ein Kugellager ausgeführt ist, dessen Innenring durch den radial außenliegenden Umfangsbereich des Planetenkäfigs 34 gebildet ist.

Um schließlich die Funktion einer Feststellbremse realisieren zu können weist die erfindungsgemäße Betätigungseinheit elektromechanische Mittel auf, die, mit dem Rotor 10 des Elektromotors 1 zusammenwirkend, sein Verriegeln ermöglichen. Im in Fig. 1 gezeigten Ausführungsbeispiel trägt der Rotor 10 zu diesem Zweck einen Zahnkranz 37, mit dessen Verzahnung eine Sperrklinke 38 in Eingriff bringbar ist. Die der Sperrklinke 38 zugeordnete elektrische Aktuatorik ist in der Art eines mechanischen Flip-Flops aufgebaut, dessen Zustand bei jeder kurzen Bestromung geändert wird. Bei der dargestellten Ausführung ist die Sperrklinke 38 mit einem lediglich schematisch angedeuteten Permanentmagneten 39 versehen, der mit Hilfe einer Spule 40 bewegt wird. Außerdem kann die Sperrklinke 39 mit Rastmitteln ausgestattet sein, die mit dem Bezugszeichen 41 versehen sind und die ein Verrasten der Sperrklinke 39 in der betätigten sowie in der unbetätigten Stellung ermöglichen. Dabei ist es besonders sinnvoll, wenn der vorhin erwähnte Zahnkranz 37 einen Bestandteil eines Radiallagers 43 bildet, in dem der Rotor 10 gelagert ist. Außerdem kann der Zahnkranz 37 als Teil eines nicht näher dargestellten Lageerkennungssystems ausgebildet sein, mit dessen Hilfe die aktuelle Position des Rotors 10 ermittelt wird. Die Lageinformation wird dann mittels eines Hallsensors oder eines magnetoresistiven Elements ermittelt.

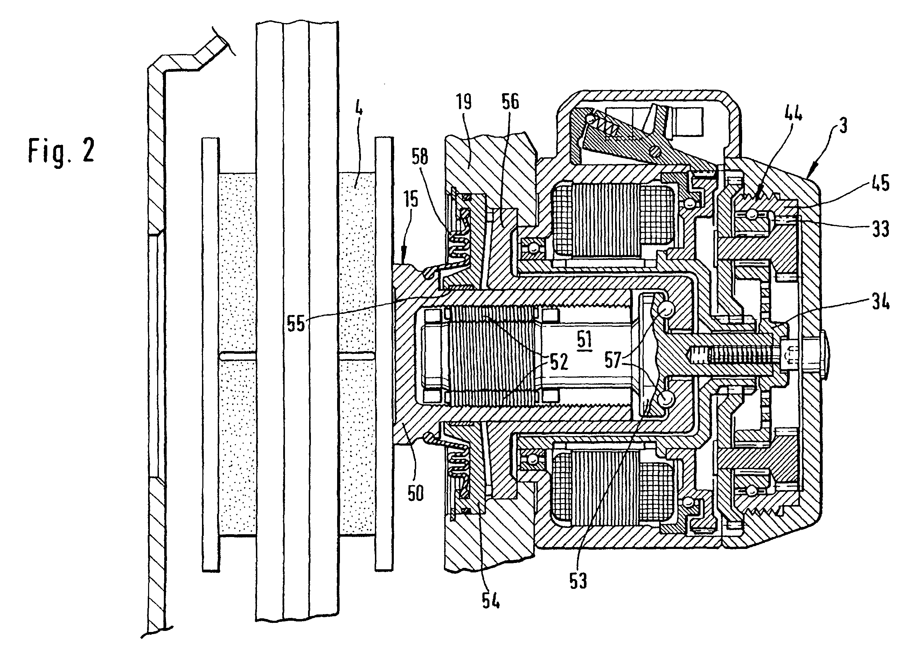

Bei der in Fig. 2 dargestellten zweiten Ausführung des Erfindungsgegenstandes, deren Aufbau weitgehend dem der Ausführung gemäß Fig. 1 entspricht und bei der für die entsprechenden Teile die gleichen Bezugszeichen verwendet wurden, ist das erste Untersetzungsgetriebe 2 als ein Rollengewindetrieb, vorzugsweise mit innenliegender Rückführung der Rollen 52, ausgebildet. Das im Zusammenhang mit Fig. 1 erwähnte Betätigungselement 15 wird durch die Gewindemutter 50 des Rollengewindetriebs gebildet, die in ihren dem ersten Reibbelag 4 zugewandten Bereich in einem im Getriebegehäuse 19 angeordneten Führungsring 54 geführt ist. Durch diese Maßnahme wird die Querkraft in das Getriebegehäuse 19 abgeleitet. Um die Gleiteigenschaften des Führungsrings 54 zu verbessern ist der Führungsring 54 mit einer Teflonbuchse 55 versehen. Die Gewindemutter 50 ist dabei so ausgeführt, dass der Durchmesser ihres im Führungsring 54 geführten Teiles kleiner ist als der Durchmesser ihrer am Reibbelag 4 anliegenden Auflagefläche, wodurch die notwendige Führungslänge verringert werden kann. Eine vom Planetenkäfig 34 angetriebene Gewindespindel 51 weist einen radialen Bund 53 größeren Durchmessers auf, über den sie sich an einem topfförmigen, den Rollengewindetrieb radial umgreifenden Führungsteil 56 axial abstützt. Die Anordnung ist dabei vorzugsweise derart getroffen, dass zwischen dem Bund 53 und dem ihm zugewandten Bereich des Führungsteiles 56 Walzkörper, beispielsweise Kugeln 57, angeordnet sind, so dass ein Axiallager gebildet wird. Die bei der Betätigung aufgebrachte Spannkraft kann mittels nicht dargestellter Kraftmesselemente, beispielsweise Dehnmessstreifen ermittelt werden, die vorzugsweise am Führungsteil 56 angebracht sind. Eine den Rollengewindetrieb vor Verunreinigungen schützende Dichtmanschette 58 ist einerseits an der Gewindemutter 50 und andererseits am Führungsring 54 befestigt. Das im Zusammenhang mit Fig. 1 erläuterte Radiallager zur Lagerung des Planetenkäfigs 34 trägt in Fig. 2 das Bezugszeichen 44, während sein Außenring mit dem Bezugszeichen 45 versehen ist. Die Ausführung der Feststellbremse sowie des zweiten Untersetzungsgetriebes 3 entspricht genau der im Zusammenhang mit Fig. 1 beschriebenen Ausführung und braucht demnach nicht näher erläutert zu werden.

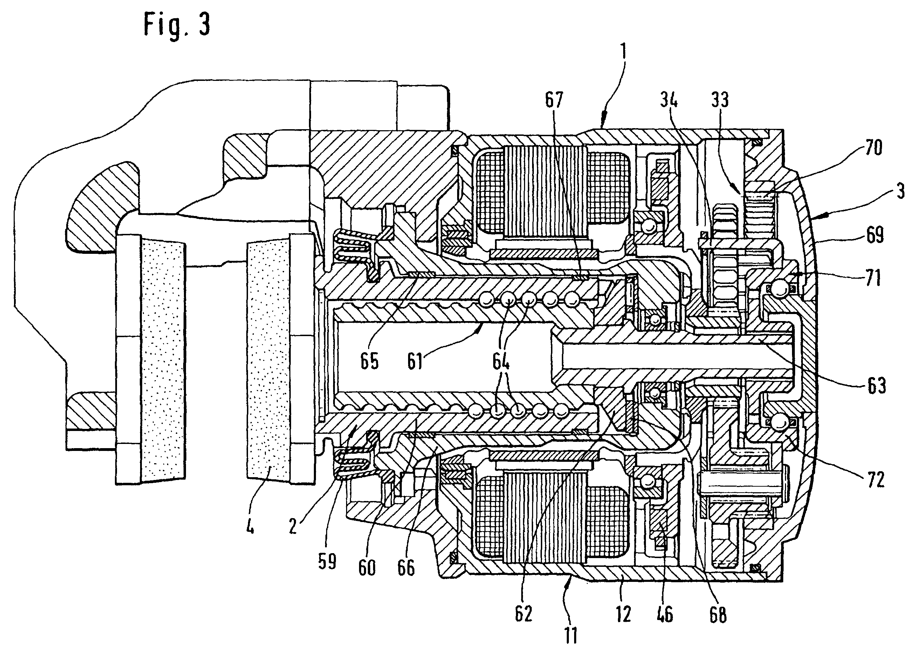

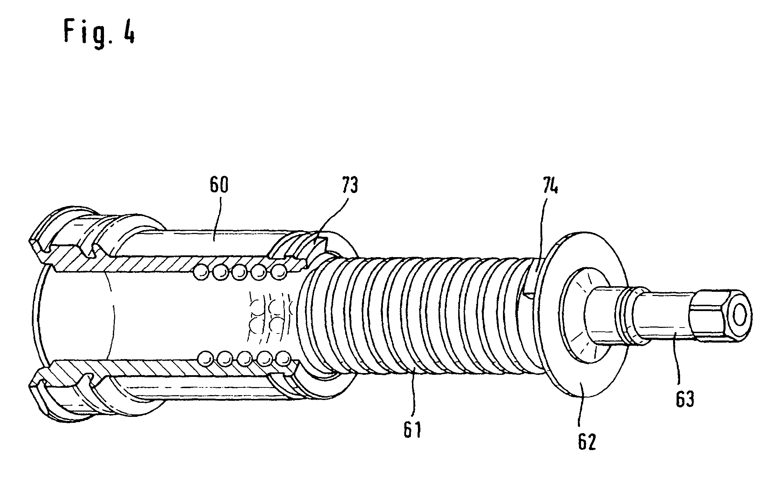

Bei der in Fig. 3 und 4 dargestellten dritten Ausführung der erfindungsgemäßen Betätigungseinheit wird als das erste Untersetzungsgetriebe 2 ein Kugelgewindetrieb verwendet, dessen Gewindemutter 60 das vorhin erwähnte Betätigungselement bildet. Die Lagerung der Gewindemutter 60 im Führungsteil 66 erfolgt sowohl in ihrem dem ersten Reibbelag 4 zugewandten Bereich mittels eines im Führungsteil 66 angeordneten ersten Gleitringes 65 als auch in ihrem dem Reibbelag 4 abgewandten Endbereich mittels eines auf der Gewindemutter 60 angeordneten zweiten Gleitringes 67. Das zweite Untersetzungsgetriebe 2 ist wie im vorhergehenden Beispiel als ein Planetengetriebe mit gestuften Planetenrädern ausgebildet, das in einem sein Gehäuse bildenden Deckel 69 angeordnet ist. Obwohl es durchaus denkbar ist, eine einteilige Gewindespindel vorzusehen, ist die vom Elektromotor 11 über das zweite Untersetzungsgetriebe 2 angetriebene Gewindespindel bei der gezeigten Ausführung dreiteilig ausgebildet und besteht aus einem mit der Gewindemutter 60 mittels mehrerer Kugeln 64 im Eingriff stehenden, rohrförmigen ersten Spindelteil 61, einem sich an einem innerhalb des Führungsteils 66 angeordneten Axiallager 68 abstützenden, ringförmigen zweiten Spindelteil 62 sowie einem dritten Spindelteil 63, das mittels einer formschlüssigen Steckverbindung mit dem Planetenkäfig 34 des zweiten Untersetzungsgetriebes 2 verbunden ist. Zu diesem Zweck ist das Ende des dritten Spindelteiles 63 beispielsweise als ein Sechskant ausgebildet, der in eine entsprechend geformte Öffnung im Planetenkäfig 34 hineingeschoben wird. Dabei ist es besonders vorteilhaft, wenn die formschlüssige Steckverbindung torsionssteif und radial nachgiebig an den Planetenkäfig 34 angekoppelt ist. Die Ankopplung erfolgt mittels eines Außenringes 72 eines im Deckel 69 vorgesehenen Radiallagers 71, wobei im Deckel 69 ein verzahnter Bereich ausgebildet ist, der das Hohlrad 70 des Planetengetriebes bildet. Eine zwischen der Gewindemutter 60 und dem Führungsteil 66 eingespannte elastische Dichtmanschette 59 verhindert ein Eindringen von Verunreinigungen ins Innere des Kugelgewindetriebs.

Wie insbesondere Fig. 4 zu entnehmen ist, ist die Gewindemutter 60 an ihrem dem Reibbelag 4 abgewandten Ende mit einem axialen Vorsprung 73 versehen, der beim Zurückstellen der Gewindemutter 60 mit einem am Umfang des Spindelteiles 61 ausgebildeten Anschlag 74 zusammenwirkt. Durch Abstützen einer Seitenfläche des Vorsprungs 73 am Anschlag 74 wird ein weiteres Zurückstellen der Gewindemutter 60 wirksam verhindert, so dass kein Verklemmen der beiden Teile 60, 61 eintreten kann.

Im Rahmen der vorliegenden Erfindung sind selbstverständlich auch zahlreiche Modifikationen denkbar. So kann z. B. der als Antriebseinheit 1 dienende Elektromotor als ein geschalteter Reluktanzmotor (SR-Motor) ausgeführt werden. Vorstellbar sind auch andere Ausführungen des Planetengetriebes, wie etwa ein zweistufiges Differenzplanetengetriebe oder ein Getriebe, dessen Planetenräder mit ihrer ersten Stufe mit einem Sonnenrad und mit ihrer zweiten Stufe unter Zwischenschaltung je eines Stirnrades mit einem Hohlrad im Eingriff stehen.

### Bezugszeichenliste

- 1: Antriebseinheit
- 2: Untersetzungsgetriebe
- 3: Untersetzungsgetriebe
- 4: Reibbelag
- 5: Reibbelag
- 6: Bremsscheibe
- 7 8 9: Stator
- 10: Rotor
- 11: Elektromotor
- 12: Motorgehäuse
- 13: Träger
- 14: Permanentmagnetsegment
- 15: Betätigungselement, Kraftübertragungsplatte
- 16: Gewindemutter
- 17: Gewindespindel
- 18: Kugel
- 19: Getriebegehäuse
- 20: Führungsbolzen
- 21: Führungsfläche, Bohrung
- 22: Lagerring
- 23: Kraftsensor
- 24: Druckstange
- 25: Bohrung
- 26: Fortsatz
- 27: Dichtung
- 28: Mehrkant
- 29: Kragen
- 30: Sonnenrad
- 31: Planetenrad
- 31a: Planetenrad
- 31b: Planetenrad
- 32: Planetenrad
- 32a: Planetenrad
- 32b: Planetenrad
- 33: Hohlrad
- 34: Planetenkäfig
- 35: Radiallager
- 36: Außenring
- 37: Zahnkranz
- 38: Sperrklinke
- 39: Permanentmagnet
- 40: Spule
- 41: Rastmittel
- 42: Bereich
- 43: Radiallager
- 44: Radiallager
- 45: Außenring
- 46 47 48 49 50: Gewindemutter
- 51: Gewindespindel
- 52: Gewinderolle
- 53: Bund
- 54: Führungsring
- 55: Teflonbuchse
- 56: Führungsteil
- 57: Kugel
- 58: Dichtung
- 59: Dichtmanschette
- 60: Gewindemutter
- 61: Spindelteil
- 62: Spindelteil
- 63: Spindelteil
- 64: Kugel
- 65: Gleitring
- 66: Führungsteil
- 67: Gleitring
- 68: Axiallager
- 69: Deckel
- 70: Hohlrad
- 71: Radiallager
- 72: Außenring
- 73: Vorsprung
- 74: Anschlag

## Patentansprüche

1. Betätigungseinheit für eine elektromechanisch betätigbare Scheibenbremse für Kraftfahrzeuge, die an einem Bremssattel angeordnet ist, in dem zwei mit je einer Seitenfläche einer Bremsscheibe (6) zusammenwirkende Reibbeläge (4,5) begrenzt verschiebbar angeordnet sind, wobei einer (4) der Reibbeläge (4,5) mittels eines Betätigungselementes (15) durch die Betätigungseinheit direkt und der andere Reibbelag (5) durch die Wirkung einer vom Bremssattel aufgebrachten Reaktionskraft mit der Bremsscheibe (6) in Eingriff bringbar ist, wobei die Betätigungseinheit aus einem Elektromotor (11), einem wirkungsmäßig zwischen dem Elektromotor (11) und dem Betätigungselement (15) angeordneten ersten Untersetzungsgetriebe (2) sowie einem zweiten zwischen dem Elektromotor (11) und einem Teil des ersten Untersetzungsgetriebes (2) angeordneten zweiten Untersetzungsgetriebe (3) besteht, und wobei der Rotor (10) des Elektromotors (11) ringförmig ausgebildet ist und das erste Untersetzungsgetriebe (2) radial umgreift, **dadurch gekennzeichnet, dass** der Elektromotor (11), das erste Untersetzungsgetriebe (2) sowie das zweite Untersetzungsgetriebe (3) als mindestens zwei unabhängig handhabbare Baugruppen derart ausgebildet sind, dass die auf die Bremsbeläge (4,5) einwirkende axiale Betätigungskraft über das erste Untersetzungsgetriebe (2) am Bremssattel abgestützt wird.

2. Betätigungseinheit nach Anspruch 1 **dadurch gekennzeichnet, dass** der Elektromotor (11), das erste Untersetzungsgetriebe (2) sowie das zweite Untersetzungsgetriebe (3) als mindestens zwei modulare Baugruppen ausgebildet sind, die getrennt und unabhängig voneinander prüfbar sind.

3. Betätigungseinheit nach Anspruch 1 **dadurch gekennzeichnet, dass** der Elektromotor (11), das erste Untersetzungsgetriebe (2) sowie das zweite Untersetzungsgetriebe (3) als je eine selbständig handhabbare Baugruppe ausgebildet sind.

4. Betätigungseinheit nach Anspruch 1 **dadurch gekennzeichnet, dass** das zweite Untersetzungsgetriebe (3) auf der den Bremsbelägen (4,5) abgewandten Seite des Elektromotors (11) angeordnet ist.

5. Betätigungseinheit nach einem der Ansprüche 1 bis 4 **dadurch gekennzeichnet, dass** das erste Untersetzungsgetriebe (2) als ein Wälzkörpergewindetrieb ausgebildet ist, dessen Gewindemutter (16) mit dem zweiten Untersetzungsgetriebe (3) zusammenwirkt.

6. Betätigungseinheit nach einem der Ansprüche 1 bis 4 **dadurch gekennzeichnet, dass** das erste Untersetzungsgetriebe (2) als ein Wälzkörpergewindetrieb ausgebildet ist, dessen Gewindespindel (51,61-63) mit dem zweiten Untersetzungsgetriebe (3) zusammenwirkt.

7. Betätigungseinheit nach Anspruch 5 oder 6, **dadurch gekennzeichnet, dass** das erste Untersetzungsgetriebe (2) als ein Rollengewindetrieb (50-53) ausgebildet ist.

8. Betätigungseinheit nach Anspruch 7, **dadurch gekennzeichnet, dass** der Rollengewindetrieb als ein Rollengewindetrieb mit innenliegender Rückführung ausgebildet ist.

9. Betätigungseinheit nach Anspruch 5 oder 6, **dadurch gekennzeichnet, dass** das erste Untersetzungsgetriebe (2) als ein Kugelgewindetrieb (16-18) ausgebildet ist.

10. Betätigungseinheit nach Anspruch 5, 7, 8 oder 9, **dadurch gekennzeichnet, dass** das Betätigungselement mit der Gewindespindel (17) des Wälzkörpergewindetriebs (16-18) in kraftübertragender Verbindung steht und durch eine Kraftübertragungsplatte (15) gebildet ist, die in einem den Wälzkörpergewindetrieb aufnehmenden ringförmigen Getriebegehäuse (19) geführt ist.

11. Betätigungseinheit nach Anspruch 10, **dadurch gekennzeichnet, dass** die Kraftübertragungsplatte (15) mindestens zwei radial gegenüberliegende Führungsbolzen (20) aufweist, die von entsprechend ausgebildeten Führungsflächen (21) bzw. Bohrungen im Getriebegehäuse (19) aufgenommen werden.

12. Betätigungseinheit nach Anspruch 5, 7, 8 oder 9, **dadurch gekennzeichnet, dass** die Gewindemutter (16) an einem im Getriebegehäuse () angeordneten Lagerring (22) axial abgestützt ist.

13. Betätigungseinheit nach Anspruch 12, **dadurch gekennzeichnet, dass** zwischen dem Lagerring (22) und dem Getriebegehäuse (19) ein Kraftsensor (23) angeordnet ist.

14. Betätigungseinheit nach Anspruch 5 und 9, **dadurch gekennzeichnet, dass** die Gewindespindel (17) des Kugelgewindetriebs eine konische Bohrung (25) aufweist, die eine der Übertragung von Druckkräften dienende Druckstange (24) aufnimmt, deren anderes Ende sich verdrehgesichert in einem axialen Fortsatz (26) der Kraftübertragungsplatte (15) abstützt.

15. Betätigungseinheit nach einem der Ansprüche 10 bis 14, **dadurch gekennzeichnet, dass** zwischen der Kraftübertragungsplatte (15) und dem Getriebegehäuse (19) eine elastische Dichtung (27) vorgesehen ist.

16. Betätigungseinheit nach einem der vorhergehenden Ansprüche, **dadurch gekennzeichnet, dass** das zweite Untersetzungsgetriebe (3) als ein Planetengetriebe ausgebildet ist.

17. Betätigungseinheit nach Anspruch 16, **dadurch gekennzeichnet, dass** das zweite Untersetzungsgetriebe (3) als ein Planetengetriebe mit gestuften Planetenrädern (31,32) ausgebildet ist.

18. Betätigungseinheit nach Anspruch 17, **dadurch gekennzeichnet, dass** das die Planetenräder mit ihrer ersten Stufe mit einem Sonnenrad im Eingriff stehen, während die Planetenräder mit ihrer zweiten Stufe unter Zwischenschaltung je eines Stirnrades mit einem Hohlrad im Eingriff stehen.

19. Betätigungseinheit nach Anspruch 16, **dadurch gekennzeichnet, dass** das zweite Untersetzungsgetriebe als ein zweistufiges Differenzplanetengetriebe ausgebildet ist.

20. Betätigungseinheit nach Anspruch 17, **dadurch gekennzeichnet, dass** das Sonnenrad (30) des Planetengetriebes am Rotor (10) ausgebildet ist, während die Planetenräder (31,32) in einem mit der Gewindemutter (16) in kraftübertragender Verbindung stehenden Planetenkäfig (34) gelagert sind und aus je einem mit dem Sonnenrad (30) im Eingriff stehenden ersten Planetenrad (31a,32a) größeren Durchmessers sowie je einem mit einem Hohlrad (33) im Eingriff stehenden zweiten Planetenrad (31b,32b) kleineren Durchmessers bestehen.

21. Betätigungseinheit nach Anspruch 20 **dadurch gekennzeichnet, dass** das Hohlrad (33) des Planetengetriebes durch einen mit einer Innenverzahnung versehenen Außenring (36) eines Radiallagers (35) gebildet ist, in dem der Planetenkäfig (34) gelagert ist.

22. Betätigungseinheit nach Anspruch 6 **dadurch gekennzeichnet, dass** das Betätigungselement durch die Gewindemutter (50,60) des Wälzkörpergewindetriebs gebildet ist.

23. Betätigungseinheit nach Anspruch 22 **dadurch gekennzeichnet, dass** ein die Gewindemutter (50,60) umgreifendes Führungsteil (56,66) vorgesehen ist, das sich an dem den Wälzkörpergewindetrieb aufnehmenden ringförmigen Getriebegehäuse (19) abstützt und an dem sich die Gewindespindel (51,61,62) ihrerseits axial abstützt.

24. Betätigungseinheit nach Anspruch 23 **dadurch gekennzeichnet, dass** die axiale Abstützung der Gewindespindel (51,-) unter Zwischenschaltung eines Axiallagers (53,57,68) mittels eines radialen Bundes (53,62) erfolgt.

25. Betätigungseinheit nach Anspruch 23 oder 24 **dadurch gekennzeichnet, dass** am Führungsteil Kraftmesselemente vorgesehen sind.

26. Betätigungseinheit nach Anspruch 7 oder 8 und 22 **dadurch gekennzeichnet, dass** die Gewindemutter (50) an ihrem dem ersten Reibbelag (4) zugewandten Ende in einem Führungsring (54) geführt ist.

27. Betätigungseinheit nach Anspruch 26 **dadurch gekennzeichnet, dass** zwischen der Gewindemutter (50) und dem Führungsring (54) eine elastische Dichtung (58) vorgesehen ist.

28. Betätigungseinheit nach Anspruch 17 **dadurch gekennzeichnet, dass** das Sonnenrad (30) des Planetengetriebes am Rotor (10) ausgebildet ist, während die Planetenräder (31,32) in einem mit der Gewindespindel (51,63) in kraftübertragender Verbindung stehenden Planetenkäfig (34) gelagert sind und aus je einem mit dem Sonnenrad (30) im Eingriff stehenden ersten Planetenrad (31a,32a) größeren Durchmessers sowie je einem mit einem Hohlrad (33) im Eingriff stehenden zweiten Planetenrad (32b,32b) kleineren Durchmessers bestehen.

29. Betätigungseinheit nach Anspruch 28 **dadurch gekennzeichnet, dass** das Hohlrad (33) des Planetengetriebes durch einen mit einer Innenverzahnung versehenen Außenring (45) eines Radiallagers (44) gebildet ist, in dem der Planetenkäfig (34) gelagert ist.

30. Betätigungseinheit nach Anspruch 28 oder 29 **dadurch gekennzeichnet, dass** das Hohlrad (33) des Planetengetriebes durch eine Innenverzahnung (70) gebildet ist, die in einem Deckel (69) ausgebildet ist, der ein Gehäuse des Planetengetriebes bildet und am Motorgehäuse (12) des Elektromotors (11) angeordnet ist.

31. Betätigungseinheit nach Anspruch 30 **dadurch gekennzeichnet, dass** die Kraftübertragung zwischen dem Planetenkäfig (34) und der Gewindespindel (63) mittels einer formschlüssigen Steckverbindung erfolgt.

32. Betätigungseinheit nach Anspruch 31 **dadurch gekennzeichnet, dass** der Planetenkäfig (34) im Deckel (69) mittels eines Radiallagers (71) gelagert ist.

33. Betätigungseinheit nach Anspruch 31 oder 32 **dadurch gekennzeichnet, dass** die formschlüssige Steckverbindung torsionssteif und radial nachgiebig an den Planetenkäfig (34) angekoppelt ist.

34. Betätigungseinheit nach einem der vorhergehenden Ansprüche **dadurch gekennzeichnet, dass** die Gewindespindel (51) einteilig ausgeführt ist.

35. Betätigungseinheit nach einem der vorhergehenden Ansprüche 1 bis 33 **dadurch gekennzeichnet, dass** die Gewindespindel (61,62,63) mehrteilig ausgeführt ist.

36. Betätigungseinheit nach einem der vorhergehenden Ansprüche **dadurch gekennzeichnet, dass** die Gewindemutter (60) an ihrem dem ersten Reibbelag (4) abgewandten Ende mit einem Vorsprung (73) versehen ist, der an einem an der Gewindespindel (61) ausgebildeten, in Umfangsrichtung wirkenden Anschlag (74) zur Anlage bringbar ist.

37. Betätigungseinheit nach einem der vorhergehenden Ansprüche **dadurch gekennzeichnet, dass** elektromechanische Mittel (37-41) vorgesehen sind, die ein Verriegeln des Rotors (10) des Elektromotors (11) ermöglichen.

38. Betätigungseinheit nach Anspruch 37 **dadurch gekennzeichnet, dass** die Mittel durch einen mit dem Rotor (10) verbundenen Zahnkranz (37) sowie eine elektromagnetisch betätigbare Sperrklinke (38) gebildet sind.

39. Betätigungseinheit nach Anspruch 38 **dadurch gekennzeichnet, dass** die Sperrklinke (38) mit Rastmitteln (41) versehen ist, die deren Verrasten sowohl in der betätigten als auch in der unbetätigten Stellung ermöglichen.

40. Betätigungseinheit nach einem der vorhergehenden Ansprüche, **dadurch gekennzeichnet, dass** der Elektromotor (11) als ein permanentmagneterregter, elektronisch kommutierter Elektromotor ausgeführt ist.

41. Betätigungseinheit nach einem der vorhergehenden Ansprüche 1 bis 38, **dadurch gekennzeichnet, dass** der Elektromotor als ein geschalteter Reluktanzmotor ausgeführt ist.

42. Betätigungseinheit nach einem der vorhergehenden Ansprüche **dadurch gekennzeichnet, dass** ein Lageerkennungssystem vorgesehen ist, das eine Erkennung der Position des Rotors (10) ermöglicht.

43. Betätigungseinheit nach Anspruch 40 **dadurch gekennzeichnet, dass** das Lageerkennungssystem einen Hallsensor aufweist.

44. Betätigungseinheit Anspruch 43 **dadurch gekennzeichnet, dass** das Lageerkennungssystem ein magnetoresistives Element aufweist.

## Claims

1. An actuating unit for an electromechanically operable disc brake for automotive vehicles which is arranged on a brake caliper in which two friction linings (4, 5) that cooperate with each one lateral surface of a brake disc (6) are arranged so as to be slidable within limits, wherein one (4) of the friction linings (4, 5) is movable into engagement with the brake disc (6) by means of an actuating element (15) by way of the actuating unit directly, and the other friction lining (5) is movable into engagement with the brake disc (6) by the effect of a reaction force generated by the brake caliper, wherein the actuating unit is comprised of an electric motor (11), a first reduction gear (2) that is arranged between the electric motor (11) and the actuating element (15) in terms of effect, as well as a second reduction gear (3) which is interposed between the electric motor (11) and a part of the first reduction gear (2), and wherein the rotor (10) of the electric motor (11) has an annular design and radially embraces the first reduction gear (2),
**characterized in that** the electric motor (11), the first reduction gear (2), and the second reduction gear (3) are configured as at least two assemblies which can be handled independently in such a manner that the axial. actuating force acting upon the brake linings (4, 5) is supported on the brake cylinder by way of the first reduction gear (2).

2. Actuating unit as claimed in claim 1,
**characterized in that** the electric motor (11), the first reduction gear (2), and the second reduction gear (3) are configured as at least two modular assemblies which can be tested separately and independently of one another.

3. Actuating unit as claimed in claim 1,
**characterized in that** the electric motor (11), the first reduction gear (2), and the second reduction gear (3) are configured as each one independent assembly.

4. Actuating unit as claimed in claim 1,
**characterized in that** the second reduction gear (3) is arranged on the side of the electric motor (11) remote from the brake linings (4, 5).

5. Actuating unit as claimed in any one of claims 1 to 4,
**characterized in that** the first reduction gear (2) is configured as a roll-body and thread drive whose thread nut (16) cooperates with the second reduction gear (3).

6. Actuating unit as claimed in any one of claims 1 to 4,
**characterized in that** the first reduction gear (2) is configured as a roll-body and thread drive whose threaded spindle (51, 61 to 63) cooperates with the second reduction gear (3).

7. Actuating unit as claimed in claim 5 or 6,
**characterized in that** the first reduction gear (2) is configured as a roller-and-thread drive (50 to 53).

8. Actuating unit as claimed in claim 7,
**characterized in that** the roller-and-thread drive is configured as a roller-and-thread drive with an inward roller return arrangement.

9. Actuating unit as claimed in claim 5 or 6,
**characterized in that** the first reduction gear (2) is configured as a ball-and-thread drive (16 to 18).

10. Actuating unit as claimed in claim 5, 7, 8, or 9,
**characterized in that** the actuating element is in a force-transmitting connection with the threaded spindle (17) of the roll-body and thread drive (16 to 18) and is formed of a force transmission plate (15) which is guided in an annular gear housing (19) in which the roll-body and thread drive is incorporated.

11. Actuating unit as claimed in claim 10,
**characterized in that** the force transmission plate (15) includes at least two radially opposite guiding pins (20) which are accommodated in correspondingly designed guiding surfaces (21) or bores in the gear housing (19).

12. Actuating unit as claimed in claim 5, 7, 8, or 9,
**characterized in that** the thread nut (16) is axially supported on a bearing ring (22) arranged in the gear housing ().

13. Actuating unit as claimed in claim 12,
**characterized in that** a force sensor (23) is arranged between the bearing ring (22) and the gear housing (19).

14. Actuating unit as claimed in claim 5 and 9,
**characterized in that** a conical bore (25) is incorporated in the threaded spindle (17) of the ball-and-thread drive in which a push rod (24) is received which serves to transmit pressure forces and the ends of which are supported in an axial extension (26) of the force transmission plate (15) or on the bottom of the bore (25) in a torsionally fixed manner.

15. Actuating unit as claimed in any one of claims 10 to 14,
**characterized in that** an elastic seal (27) is provided between the force transmission plate (15) and the gear housing (19).

16. Actuating unit as claimed in any one of the preceding claims,
**characterized in that** the second reduction gear (3) is configured as a planetary gearing.

17. Actuating unit as claimed in claim 16,
**characterized in that** the second reduction gear (3) is configured as a planetary gearing with stepped planet pinions (31, 32).

18. Actuating unit as claimed in claim 17,
**characterized in that** the planet pinions with their first step are in engagement with a sun wheel, while the planet pinions with their second step are in engagement with a hollow wheel, by the intermediary of each one spur wheel.

19. Actuating unit as claimed in claim 16,
**characterized in that** the second reduction gear is configured as a two-step differential planetary gearing.

20. Actuating unit as claimed in claim 17,
**characterized in that** the sun wheel (30) of the planetary gearing is designed on the rotor (10), while the planet pinions (31, 32) are mounted in a pinion cage (34) that is in a force-transmitting connection with the thread nut (16), and the planet pinions are comprised of one first large-diameter planet pinion (31a, 32a) that is in engagement with the sun wheel (30) and each one smaller-diameter second planet pinion (31b, 32b) that is in engagement with a hollow wheel (33).

21. Actuating unit as claimed in claim 20,
**characterized in that** the hollow wheel (33) of the planetary gearing is formed of an internally toothed outer ring (36) of a radial bearing (35) in which the pinion cage (34) is supported.

22. Actuating unit as claimed in claim 6,
**characterized in that** the actuating element is the thread nut (50, 60) of the roll-body and thread drive.

23. Actuating unit as claimed in claim 22,
**characterized in that** there is provision of a guiding element (56, 66) that embraces the thread nut (50, 60) and is supported on the annular housing (19) receiving the roll-body and thread drive, with the threaded spindle (51, 61, 62) being axially supported on the guiding element.

24. Actuating unit as claimed in claim 23,
**characterized in that** the axial support of the threaded spindle (51,-) is effected by means of a radial bead (53, 57, 68) by the intermediary of an axial bearing (57, 68).

25. Actuating unit as claimed in claim 23 or 24,
**characterized in that** force-measuring elements are arranged on the guiding element.

26. Actuating unit as claimed in claim 7, or 8, and 22,
**characterized in that** the thread nut (50) on its end close to the first friction lining (4) is guided in a guiding ring (54).

27. Actuating unit as claimed in claim 26,
**characterized in that** an elastic seal (58) is interposed between the thread nut (50) and the guiding ring (54).

28. Actuating unit as claimed in claim 17,
**characterized in that** the sun wheel (30) of the planetary gearing is provided on the rotor (10), while the planet pinions (31, 32) are mounted in a pinion cage (34) that is in a force-transmitting connection with the threaded spindle (51, 63) and are respectively comprised of a first large-diameter planet pinion (31a, 32a) that is in engagement with the sun wheel (30) and a second smaller-diameter planet pinion (32b, 32b) that is in engagement with a hollow wheel (33).

29. Actuating unit as claimed in claim 28,
**characterized in that** the hollow wheel (33) of the planetary gearing is formed of an internally toothed outer ring (45) of a radial bearing (44) in which the pinion cage (34) is mounted.

30. Actuating unit as claimed in claim 28 or 29,
**characterized in that** the hollow wheel (33) of the planetary gearing is formed of an internal toothing (70) which is provided in a cover (69) that represents the casing of the planetary gearing and is arranged on the motor housing (12) of the electric motor (11).

31. Actuating unit as claimed in claim 30,
**characterized in that** the force is transmitted between the pinion cage (34) and the threaded spindle (63) by means of a form-locking plug coupling.

32. Actuating unit as claimed in claim 31,
**characterized in that** the pinion cage (34) is mounted in the cover (69) by means of a radial bearing (71).

33. Actuating unit as claimed in claim 31 or 32,
**characterized in that** the form-locking plug coupling is coupled to the .pinion cage (34) in a torsionally resistant and radially flexible manner.

34. Actuating unit as claimed in any one of the preceding claims,
**characterized in that** the threaded spindle (51) has a one-part design.

35. Actuating unit as claimed in any one of the preceding claims 1 to 33,
**characterized in that** the threaded spindle (61, 62, 63) has a multi-part design.

36. Actuating unit as claimed in any one of the preceding claims,
**characterized in that** the thread nut (60) at its end remote from the first friction lining (4) includes a projection (73) which is movable into abutment on a stop (74) that is designed on the threaded spindle (61) and acts in a circumferential direction.

37. Actuating unit as claimed in any one of the preceding claims,
**characterized in that** electromechanical means (37 to 41) are provided which allow mechanically locking the rotor (10) of the electric motor (11).

38. Actuating unit as claimed in claim 37,
**characterized in that** the means is formed of a toothed rim (37) connected to the rotor (10) and an electromagnetically operable lock pawl (38).

39. Actuating unit as claimed in claim 38,
**characterized in that** the lock pawl (38) includes catching means (41) which permit locking engagement both in the actuated and the non-actuated position.

40. Actuating unit as claimed in any one of the preceding claims,
**characterized in that** the electric motor (11) is configured as an electronically commutated electric motor energized by a permanent magnet.

41. Actuating unit as claimed in any one of the preceding claims 1 to 38,
**characterized in that** the electric motor is configured as a switch reluctance motor.

42. Actuating unit as claimed in any one of the preceding claims,
**characterized in that** a position detection system is provided which renders possible to detect the position of the rotor (10).

43. Actuating unit as claimed in claim 40,
**characterized in that** the position detection system includes a Hall sensor.

44. Actuating unit as claimed in claim 43,
**characterized in that** the position detection system includes a magneto-resistive element.

## Revendications

1. Unité d'actionnement, pour frein à disque à actionnement électromécanique pour véhicule automobile, qui est disposé sur un étrier de frein dans lequel sont disposées, de façon à pouvoir être déplacées en translation d'une manière limitée, deux garnitures de friction (4, 5) coopérant chacune avec une surface latérale respective d'un disque de frein (6), les garnitures de friction (4, 5) pouvant être amenées en prise avec le disque de frein (6) l'une (4) directement par l'unité d'actionnement au moyen d'un élément d'actionnement (15) et l'autre (5) sous l'effet de l'action d'une force de réaction exercée par l'étrier de frein, l'unité d'actionnement étant constituée d'un moteur électrique (11), d'un première engrenage de démultiplication (2), disposé en ce qui concerne l'action entre le moteur électrique (11) et l'élément d'actionnement (15), et d'un second engrenage de démultiplication (3) disposé entre le moteur électrique (11) et une partie du premier engrenage de démultiplication (2), tandis que le rotor (10) du moteur électrique (11) est réalisé avec une forme annulaire et entoure radialement le premier engrenage de démultiplication (2), **caractérisée en ce que** le moteur électrique (11), le premier engrenage de démultiplication (2) et le second engrenage de démultiplication (3) sont réalisés sous forme d'au moins deux groupes structurels pouvant être manoeuvrés indépendamment, d'une manière telle que la force axiale d'actionnement s'exerçant sur les garnitures de frein (4, 5) prend appui sur l'étrier de frein par l'intermédiaire du premier engrenage de démultiplication (2).

2. Unité d'actionnement suivant la revendication 1, **caractérisée en ce que** le moteur électrique (11), le premier engrenage de démultiplication (2) et le second engrenage de démultiplication (3) sont réalisés sous forme d'au moins deux groupes structurels modulaires qui peuvent être contrôlés séparément et d'une manière indépendante l'un de l'autre.

3. Unité d'actionnement suivant la revendication 1, **caractérisée en ce que** le moteur électrique (11), le premier engrenage de démultiplication (2) et le second engrenage de démultiplication (3) sont réalisés chacun sous forme d'un groupe structurel respectif pouvant être manoeuvré d'une manière autonome.

4. Unité d'actionnement suivant la revendication 1, **caractérisée en ce que** le second engrenage de démultiplication (3) est disposé sur le côté du moteur électrique (11 ) qui est situé à l'opposé des garnitures de frein (4, 5).

5. Unité d'actionnement suivant l'une des revendications 1 à 4, **caractérisée en ce que** le premier engrenage de démultiplication (2) est réalisé sous forme d'une vis à éléments de roulement dont l'écrou (16) coopère avec le second engrenage de démultiplication (3).

6. Unité d'actionnement suivant l'une des revendications 1 à 4, **caractérisée en ce que** le premier engrenage de démultiplication (2) est réalisé sous forme d'une vis à éléments de roulement dont la tige filetée (51, 61-63) coopère avec le second engrenage de démultiplication (3).

7. Unité d'actionnement suivant la revendication 5 ou 6, **caractérisée en ce que** le premier engrenage de démultiplication (2) est réalisé sous forme d'une vis à rouleaux (50-53).

8. Unité d'actionnement suivant la revendication 7, **caractérisée en ce que** la vis à rouleaux est réalisée sous forme d'une vis à rouleaux à retour intérieur.

9. Unité d'actionnement suivant la revendication 5 ou 6, **caractérisée en ce que** le premier engrenage de démultiplication (2) est réalisé sous forme d'une vis à billes (16-18).

10. Unité d'actionnement suivant la revendication 5, 7, 8 ou 9, **caractérisée en ce que** l'élément d'actionnement est relié en ce qui concerne la transmission de force à la tige filetée (17) de la vis à éléments de roulement (16-18) et est formé d'une plaque de transmission de force (15) qui est guidée dans un boîtier d'engrenage (19) de forme annulaire servant à loger la vis à éléments de roulement.

11. Unité d'actionnement suivant la revendication 10, **caractérisée en ce que** la plaque de transmission de force (15) comporte au moins deux goujons de guidage (20) qui sont radialement opposés et qui sont logés dans le boîtier d'engrenage (19) par des surfaces de guidage (21) d'agencement correspondant ou des perçages.

12. Unité d'actionnement suivant la revendication 5, 7, 8 ou 9, **caractérisée en ce que** l'écrou (16) est en appui axial sur une bague de roulement (22) disposée dans le boîtier d'engrenage ().

13. Unité d'actionnement suivant la revendication 12, **caractérisée en ce qu'**un capteur de force (23) est disposé entre la bague de roulement (22) et le boîtier d'engrenage (19).

14. Unité d'actionnement suivant la revendication 5 et 9, **caractérisée en ce que** la tige filetée (17) de la vis à billes comporte un alésage conique (25) qui sert à loger une tige de pression (24) qui sert à la transmission de forces de pression et dont l'autre extrémité prend appui, en étant calée en rotation, dans un prolongement axial (26) de la plaque de transmission de force (15).

15. Unité d'actionnement suivant l'une des revendications 10 à 14, **caractérisée en ce qu'**une garniture d'étanchéité (27) élastique est prévue entre la plaque de transmission de force (15) et le boîtier d'engrenage (19).

16. Unité d'actionnement suivant l'une des revendications précédentes, **caractérisée en ce que** le second engrenage de démultiplication (3) est réalisé sous forme d'un engrenage épicycloïdal.

17. Unité d'actionnement suivant la revendication 16, **caractérisée en ce que** l'engrenage de démultiplication (3) est réalisé sous forme d'un engrenage épicycloïdal à satellites étagés (31, 32).

18. Unité d'actionnement suivant la revendication 17, **caractérisée en ce que** les satellites engrènent par leur premier étage avec un planétaire, tandis que les satellites engrènent par leur second étage, moyennant l'interposition d'une roue à denture droite respective pour chacun, avec une couronne dentée.

19. Unité d'actionnement suivant la revendication 16, **caractérisée en ce que** le second engrenage de démultiplication est réalisé sous forme d'un second engrenage épicycloïdal différentiel à deux étages.

20. Unité d'actionnement suivant la revendication 17, **caractérisée en ce que** le planétaire (30) de l'engrenage épicycloïdal est réalisé sur le rotor (10), tandis que les satellites (31, 32) sont montés à palier dans une cage porte-satellites (34) reliée sur le plan de la transmission de force à l'écrou (16) et sont constitués chacun d'un premier satellite (31a, 32a) respectif de plus grand diamètre engrenant avec le planétaire (30) et d'un second satellite (31 b, 32b) respectif de plus petit diamètre engrenant avec une couronne dentée (33).

21. Unité d'actionnement suivant la revendication 20 **caractérisée en ce que** la couronne dentée (33) de l'engrenage épicycloïdal est formée par une bague extérieure (36), pourvue d'une denture intérieure, d'un roulement radial (35) dans lequel la cage porte-satellites (34) est montée à palier.

22. Unité d'actionnement suivant la revendication 6, **caractérisée en ce que** l'élément d'actionnement est formé par l'écrou (50, 60) de la vis à éléments de roulement.

23. Unité d'actionnement suivant la revendication 22, **caractérisée en ce qu'**il est prévu une pièce de guidage (56, 66) qui entoure l'écrou (50, 60) et prend appui sur le boîtier d'engrenage (19) de forme annulaire servant à loger la vis à éléments de roulement et sur laquelle la tige filetée (51, 61, 62) prend elle-même appui axialement.

24. Unité d'actionnement suivant la revendication 23, **caractérisée en ce que** l'appui axial de la tige de vis (51, -) s'obtient, moyennant l'interposition d'un roulement axial (53, 57, 68), au moyen d'une collerette radiale (53, 62).

25. Unité d'actionnement suivant la revendication 23 ou 24, **caractérisée en ce que** des éléments de mesure de force sont prévus sur la pièce de guidage.

26. Unité d'actionnement suivant la revendication 7 ou 8 et 22, **caractérisée en ce que** l'écrou (50) est guidé, à son extrémité située du côté de la première garniture de friction (4), dans un anneau de guidage (54).

27. Unité d'actionnement suivant la revendication 26, **caractérisée en ce qu'**une garniture d'étanchéité (58) élastique est prévue entre l'écrou (50) et l'anneau de guidage (54).

28. Unité d'actionnement suivant la revendication 17, **caractérisée en ce que** le planétaire (30) de l'engrenage épicycloïdal est réalisé sur le rotor (10), tandis que les satellites (31, 32) sont montés à palier dans une cage porte-satellites (34) reliée sur le plan de la transmission de force à la vis (51,63) et sont constitués chacun d'un premier satellite (31 a, 32a) respectif de plus grand diamètre engrenant avec le planétaire (30) et d'un second satellite (32b, 32b) respectif de plus petit diamètre engrenant avec une couronne dentée (33).

29. Unité d'actionnement suivant la revendication 28 **caractérisée en ce que** la couronne dentée (33) de l'engrenage épicyloïdal est formée par une bague extérieure (45), pourvue d'une denture intérieure, d'un roulement radial (44) dans lequel la cage porte-satellites (34) est montée à palier.

30. Unité d'actionnement suivant la revendication 28 ou 29, **caractérisée en ce que** la couronne dentée (33) de l'engrenage épicycloïdal est formée par une denture intérieure (70) qui est réalisée dans un couvercle (69) qui forme un boîtier de l'engrenage épicycloïdal et est disposé sur le carter de moteur (12) du moteur électrique (11).

31. Unité d'actionnement suivant la revendication 30, **caractérisée en ce que** la transmission de force entre la cage porte-satellites (34) et la tige filetée (63) a lieu au moyen d'une liaison d'emboîtement par complémentarité de formes.

32. Unité d'actionnement suivant la revendication 31, **caractérisée en ce que** la cage porte-satellites (34) est montée à palier dans le couvercle (69) au moyen d'un roulement radial (71).

33. Unité d'actionnement suivant la revendication 31 ou 32, **caractérisée en ce que** la liaison d'emboîtement par complémentarité de force est couplée, d'une manière rigide en torsion et d'une manière flexible radialement, à la cage porte-satellites (34).

34. Unité d'actionnement suivant l'une des revendications précédentes, **caractérisée en ce que** la tige filetée (51) est réalisée en une seule pièce.

35. Unité d'actionnement suivant l'une des revendications précédentes 1 à 33, **caractérisée en ce que** la tige filetée (61, 62, 63) est réalisée en plusieurs pièces.

36. Unité d'actionnement suivant l'une des revendications précédentes, **caractérisée en ce que** l'écrou (60) est pourvu, à son extrémité située du côté opposé à la première garniture de friction (4), d'une partie en saillie (73) qui peut être amenée en appui sur une butée (74) réalisée sur la tige filetée (61) et agissant suivant la direction circonférentielle.

37. Unité d'actionnement suivant l'une des revendications précédentes, **caractérisée en ce que** des moyens électromécaniques (37-41) qui permettent un verrouillage du rotor (10) du moteur électrique (11) sont prévus.

38. Unité d'actionnement suivant la revendication 37, **caractérisée en ce que** les moyens sont formés d'une couronne dentée (37), solidaire du rotor (10), et d'un cliquet de verrouillage (38) à actionnement électromagnétique.

39. Unité d'actionnement suivant la revendication 38, **caractérisée en ce que** le cliquet de verrouillage (38) est pourvu de moyens d'encliquetage (41) qui permettent son encliquetage aussi bien dans la position actionnée que dans la position non actionnée.

40. Unité d'actionnement suivant l'une des revendications précédentes, **caractérisée en ce que** le moteur électrique (11) est réalisé sous forme d'un moteur électrique à excitation par aimant permanent et à commutation électronique.

41. Unité d'actionnement suivant l'une des revendications précédentes 1 à 38, **caractérisée en ce que** le moteur électrique est réalisé sous forme d'un moteur à réluctance interposé.

42. Unité d'actionnement suivant l'une des revendications précédentes, **caractérisée en ce qu'**il est prévu un système de reconnaissance de position qui permet une reconnaissance de la position du rotor (10).

43. Unité d'actionnement suivant la revendication 40, **caractérisée en ce que** le système de reconnaissance de position comprend un capteur Hall.

44. Unité d'actionnement suivant la revendication 43, **caractérisée en ce que** le système de reconnaissance de position comprend un élément magnétorésistif.
